# EUROPÄISCHE PATENTSCHRIFT

(11) **EP 3 468 752 B1**
(45) Veröffentlichungstag und Bekanntmachung des Hinweises auf die Patenterteilung: **04.10.2023**
(21) Anmeldenummer: 17729851.0
(22) Anmeldetag: 12.06.2017
(51) Int. Cl.: B25J 9/16

(54) **VERFAHREN ZUM STEUERN EINES MANIPULATORSYSTEMS**
METHOD FOR CONTROLLING A MANIPULATOR SYSTEM
PROCÉDÉ DE COMMANDE D'UN SYSTÈME DE MANIPULATEUR

(30) Priorität: 13.06.2016 DE 102016210419
(43) Veröffentlichungstag der Anmeldung: 17.04.2019
(73) Patentinhaber: KUKA Deutschland GmbH, 86165 Augsburg (DE)
(72) Erfinder: HAGENAUER, Andreas, 86316 Friedberg (DE)
(74) Vertreter: Oelke, Jochen
(86) Internationale Anmeldenummer: PCT/EP2017/064226
(87) Internationale Veröffentlichungsnummer: WO 2017/216082

(56) Entgegenhaltungen:
- EP-A2- 1 616 674
- WO-A2-2012/097835
- DE-A1- 4 011 591
- DE-A1- 4 342 660
- DE-A1-102010 012 598
- DE-U1-202014 010 483
- US-A1- 2004 019 407
- US-A1- 2014 135 986

## Beschreibung

### Gebiet der Erfindung

Die Erfindung betrifft ein Verfahren zum Steuern eines Manipulatorsystems, wobei das Manipulatorsystem zumindest einen Manipulator und eine Steuereinrichtung umfasst, welche Steuereinrichtung dazu eingerichtet ist den Manipulator mittels eines Gesamt-Manipulatorprogramms zu steuern und wobei das Gesamt-Manipulatorprogramm ein erstes Manipulatorprogramm und zumindest ein zweites Manipulatorprogramm umfasst.

### Hintergrund der Erfindung

Manipulatorsysteme umfassen typischerweise zumindest einen Manipulator, welcher mittels einer Steuereinrichtung gesteuert werden kann. Zum Steuern kommen typischerweise Manipulatorprogramme, insbesondere Bewegungsprogramme zum Einsatz, welche beispielsweise eine Bewegungsbahn des Manipulators im Raum definieren, bzw. die Bewegung des Manipulators steuern oder allgemein eine Ablauflogik innerhalb des Manipulatorsystems bestimmen. Beispielsweise können mittels des Manipulatorprogramms Verfahrgeschwindigkeiten, Beschleunigungen und weitere Manipulator spezifische Funktionen programmiert werden. Überdies können Bahnschaltpunkte programmiert werden. Bahnschaltpunkte sind Punkte der Bewegungsbahn des Manipulators, an welchen der Manipulator eine bestimmte Aktion ausführen soll. Beispielsweise kann ein Endeffektor des Manipulators, wie beispielsweise ein Greifer, geöffnet oder geschlossen werden. Ebenso kann in einem Bahnschaltpunkt die Verfahrgeschwindigkeit des Manipulators angepasst werden. Weitere Funktionen sind ebenfalls möglich.

Manipulatoren sind Handhabungsgeräte, die eine physikalische Interaktion mit der Umgebung ermöglichen. Insbesondere können Manipulatoren Industrieroboter sein, wobei Industrieroboter Mehrzweckmanipulatoren sind, welche über zumindest drei frei programmierbare Bewegungsachsen verfügen. Industrieroboter führen Endeffektoren, wie Werkzeuge, und sind dazu eingerichtet in der Umgebung befindliche Gegenstände zu manipulieren. Beispielsweise können Industrieroboter dazu eingerichtet sein Schweißverbindungen herzustellen oder Industrieroboter können dazu eingerichtet sein Objekte zu bewegen. Weitere Anwendungen sind ebenfalls bekannt.

Insbesondere werden Manipulatorsysteme, respektive Manipulatoren mittels einer Steuereinrichtung gesteuert. Die Steuereinrichtung umfasst dazu ein Manipulatorprogramm, welches typischerweise in einer entsprechenden Programmiersprache programmiert ist. Mit dieser Programmiersprache wird typischerweise die Ablauflogik eines entsprechenden Manipulatorprogramms festgelegt und beispielsweise die beabsichtigte Bewegungsbahn des Manipulators beschrieben. Um vielseitig einsetzbar zu sein, und um Anwendern zu ermöglichen Manipulatorprogramme in einer Vielzahl von Programmiersprachen erstellen zu können, unterstützen entsprechende Steuerungseinrichtungen mitunter mehrere Programmiersprachen, so dass unterschiedlich definierte Manipulatorprogramme zum Steuern eines Manipulatorsystems eingesetzt werden können.

Grundsätzlich werden zwei Typen der Manipulatorprogramm-Erstellung unterschieden. Zum einen können die Manipulatorprogramme "offline" erstellt werden. In der "Offline"- Erstellung werden typischerweise einzelne Bewegungsbefehle wie Geradeausfahrt, Kreisfahrt, Spline-Fahrt etc. hintereinander gefügt, um die gewünschte Bewegungsbahn des Manipulators zu beschreiben.

Alternativ können Manipulatorprogramme "online" erstellt werden. Die "Online"-Erstellung von Manipulatorprogrammen erfolgt typischerweise direkt am Manipulator, indem der Manipulator "geteacht" wird. Dies geschieht in der Regel in einem interaktiven und iterativen Verfahren. Dabei werden markante Punkte der beabsichtigten Bewegungsbahn des Manipulators nacheinander aufgenommen. Das Aufnehmen der Punkte erfolgt, indem der Manipulator manuell in die entsprechenden Punkte bewegt wird. Um die erstellte Bewegungsbahn des Manipulators zu optimieren, können weitere Punkte in die bestehende Bahn eingefügt oder bereits erstellte Punkte gelöscht werden. Ebenso können Bahnattribute in entsprechenden Bewegungsbahn-Abschnitten geändert werden. Ein mögliches Bahnattribut ist die Vorgabe für einen bestimmten Orientierungsverlauf und/oder die Vorgabe eines Krümmungsradius eines Bahnabschnittes, und/oder die Art der Verbindung zweier geteachter Punkte. Beispielsweise können zwei geteachte Punkte linear oder mittels einer Kreisbahn verbunden werden.

Dieses interaktive und iterative Verfahren erfordert es, dass Teile der Bewegungsbahn des Manipulators wiederholt abgefahren werden müssen, um zu ermitteln, ob die Bewegungsbahn die beabsichtigte Form aufweist. Es hat sich hierbei als nützlich erwiesen, die entsprechend programmierte Bewegungsbahn vorwärts und rückwärts abfahren zu können. Weiterhin ist es wünschenswert bei der "Online"-Erstellung, bestimmte Stellen der Bewegungsbahn direkt anfahren zu können und von dort aus die programmierte Bahnbewegung mittels des Manipulators abfahren zu können.

Das "Online"-Erstellen hat insbesondere den Vorteil, dass die Bewegungen des Manipulators an die tatsächlichen Gegebenheiten, wie Bauteiltoleranzen, Roboterungenauigkeiten, nicht modellierte Teile angepasst werden können. Beispielsweise kann kein Modell der Umgebung, der Werkstücke und/oder des Manipulators vorliegen, sodass eine "Offline"-Erstellung unmöglich ist.

Das zentrale Element der "Online"-Erstellung ist das manuelle Anfahren von Punkten, um deren Koordinaten als definierende Punkte der Bewegungsbahn aufzunehmen. Das vorwärts und rückwärts Abfahren der Bewegungsbahn bzw. das direkte Anfahren bestimmter Stellen der Bewegungsbahn und das Abfahren der Bewegungsbahn von diesen Stellen aus, erlaubt die sich ergebende Bewegungsbahn schnell zu beurteilen und effizient zu verbessern.

Im Gegensatz dazu erlauben kompilierte Programmiersprachen mit komplexen Kontrollstrukturen (d.h. die "Offline"-Erstellung) typischerweise keine derartige interaktive Programmerstellung. Folglich bietet das "Online"-Erstellen von Manipulatorprogrammen eine Reihe von Vorteilen. Das konventionelle Erstellen, d. h. das "Offline"-Erstellen, setzt hingegen ein Modell des Manipulators und/oder der Umgebung voraus. Konventionell erstellte Manipulatorprogramme können jedoch relativ schnell erstellt werden und benötigen nur eine geringe Rechenkapazität. Allerdings stellen diese "offline" erstellten Manipulatorprogramme typischerweise Funktionen wie das vorwärts und rückwärts Abfahren und Anfahren bestimmter Bahnabschnitte nicht bereit, oder diese Funktionen müssen mit erheblichem Aufwand separat programmiert werden. Diese Programmierung im "Offline"-Erstellen von Manipulatorprogrammen ist zeitintensiv und fehleranfällig. Insbesondere sind hierzu oftmals vorgegebene Programmstrukturen (wie Fold-Strukturen) einzuhalten, so dass nicht alle zur Verfügung stehenden Funktionalitäten der entsprechenden Programmiersprache ausgenutzt werden können, wenn Funktionen wie vorwärts und rückwärts Abfahren und Anfahren bestimmter Bahnabschnitte bereitgestellt werden sollen.

Die DE 102010012598 A1 offenbart eine Prozessmodulbibliothek und eine graphische Programmierumgebung zum Programmieren von Manipulatorprozessen. Die einzelnen, miteinander kombinierbaren Prozessmodule der Bibliothek werden aus einem gemeinsamen Befehlsdatensatz bestehend aus Basisbefehlen erstellt und bilden für sich Teilprozesse eines gesamten Manipulatorprogrammes ab.

Die DE 4011591 A1 offenbart eine numerische Steuerung, bei dem mittels einer Lernfunktion ein bestehendes Bearbeitungsprogramm verändert, z.B. parametriert, oder ein neues Lern-Bearbeitungsprogramm erstellt werden kann.

Die EP1616674A2 offenbart eine Robotersteuerung zur einfachen Erzeugung eines Bearbeitungsprogrammes, bei der ein werkstückspezifisches Lernprogramm aus einer Datenbank verschiedener Lernprogramme geladen wird.

Eine Aufgabe der vorliegenden Erfindung ist es daher, die eingangs beschriebenen Nachteile zumindest teilweise auszuräumen und die Vorteile der Erstellungsverfahren zu kombinieren.

### Ausführliche Beschreibung der Erfindung

Die Aufgabe wird durch ein Verfahren zum Steuern eines Manipulatorsystems nach Anspruch 1 und ein computerlesbares Medium nach Anspruch 11 gelöst. Weiterhin wird die Aufgabe zumindest teilweise durch eine Steuereinrichtung nach Anspruch 12 und eine Computerprogramm nach Anspruch 13 gelöst.

Insbesondere werden die Aufgaben gelöst durch ein Verfahren zum Steuern eines Manipulatorsystems, wobei das Manipulatorsystem zumindest einen Manipulator und eine Steuereinrichtung umfasst, welche Steuereinrichtung dazu eingerichtet ist, den Manipulator mittels eines Manipulatorprogramms zu steuern wobei das Verfahren die folgenden Verfahrensschritte umfasst:
- Bereitstellen eines ersten Manipulatorprogramms, welches einen ersten Teil einer Bewegungsbahn des Manipulators beschreibt und in einer ersten Programmiersprache implementiert ist;
- Bereitstellen zumindest eines zweiten Manipulatorprogramms, wobei das zweite Manipulatorprogramm einen zweiten Teil der Bewegungsbahn des Manipulators beschreibt, und nicht in der ersten Programmiersprache implementiert ist, und wobei das zweite Manipulatorprogramm zumindest ein Bahnattribut umfasst, welches mittels des ersten Manipulatorprogramms geändert werden kann;
- Einbinden des zweiten Manipulatorprogramms in das erste Manipulatorprogramm, um ein Gesamt-Manipulatorprogramm zu definieren und
- Steuern des Manipulatorsystems mittels der Steuereinrichtung und des Gesamt-Manipulatorprogramms
- wobei das zweite Manipulatorprogramm in einer zweiten Programmiersprache
implementiert ist, dadurch gekennzeichnet, dass das erste Manipulatorprogramm einen ersten Teil der Bewegungsbahn des Manipulators beschreibt, und dass die erste und zweite Programmiersprache je zumindest einen Manipulatorprogramm-Befehl enthalten, dessen Funktion in der jeweils anderen Programmiersprache nicht enthalten ist und wobei das erste Manipulatorprogramm dazu eingerichtet ist, den zweiten Teil der Bewegungsbahn, der mittels des zweiten Manipulatorprogramms beschrieben ist und/oder einen Übergang von dem ersten Teil der Bewegungsbahn zu dem zweiten Teil der Bewegungsbahn, zu optimieren, insbesondere zu glätten, wobei mittels des ersten Manipulatorprogramms zumindest ein Bahnattribut eines zweiten Manipulatorprogramms verändert werden kann, um den zweiten Teil der Bewegungsbahn und/oder einen Übergang von dem ersten Teil der Bewegungsbahn zu dem zweiten Teil der Bewegungsbahn zu optimieren, insbesondere zu glätten.

Das erste Manipulatorprogramm definiert die eigentliche Ablauflogik des Gesamt-Manipulatorprogramms. Beispielsweise kann das erste Manipulatorprogramm, welches in einer ersten Programmiersprache implementiert ist, in einer konventionellen Programmiersprache implementiert sein, welche das "Offline"-Erstellen von Bewegungsbahnen von Manipulatoren ermöglicht. Das zweite Manipulatorprogramm, welches nicht in der ersten Programmiersprache programmiert ist, kann beispielsweise durch externe Werkzeuge erstellt worden sein, die beispielsweise das "Online"-Erstellen von Manipulatorbahnen ermöglichen.

Derartige "online" erstellte zweite Manipulatorprogramme können beispielsweise durch "teachen" des Manipulators erstellt werden, indem mehrere Bahnpunkte aufgenommen werden, die zu einer entsprechenden Bewegungsbahn des Manipulators zusammengefügt werden. Neben rein geometrischen Definitionen des zweiten Teils der Bewegungsbahn, kann das zweite Manipulatorprogramm auch Orientierungsverläufe, Krümmungsradien der Bahn, Geschwindigkeiten des Manipulators auf der Bahn und andere Bahnattribute umfassen. Beispielsweise kann als Bahnattribut die Lage von Bahnschaltpunkten auf der Bewegungsbahn definiert sein. Andere Bahnattribute, die die Geometrie der Bewegungsbahn beeinflussen oder die Lage der Bewegungsbahn im Raum, und/oder das Abfahrverhalten, mittels welchem der Manipulator die Bewegungsbahn abfährt, können ebenso als Bahnattribute hinterlegt sein. Weitere Bahnattribute sind ebenso vorsehbar.

Das Einbinden des zweiten Manipulatorprogramms in das erste Manipulatorprogramm kann in der Art erfolgen, dass das erste Manipulatorprogramm, während das zweite Manipulatorprogramm abläuft, unterbrochen ist, oder in der Art, dass das erste Manipulatorprogramm im Hintergrund weiterläuft, um beispielsweise Bahnattribute des zweiten Manipulatorprogramms zu verändern.

Insbesondere kann das erste Manipulatorprogramm, welches einen ersten Teil einer Bewegungsbahn des Manipulators beschreibt, durch das Einbinden des zweiten Manipulatorprogramms, welches einen zweiten Teil der Bewegungsbahn des Manipulators beschreibt, derart unterbrochen werden oder im Hintergrund ablaufen, dass zunächst ein erster Abschnitt des ersten Teils der Bewegungsbahn des Manipulators abgefahren wird, bevor der zweite Teil der Bewegungsbahn des Manipulators abgefahren wird. Im Anschluss an den zweiten Teil der Bewegungsbahn des Manipulators kann ein zweiter Abschnitt des ersten Teils der Bewegungsbahn des Manipulators abgefahren werden. Folglich wird der zweite Teil der Bewegungsbahn des Manipulators in den ersten Teil der Bewegungsbahn des Manipulators derart eingebunden, dass er zwischen zwei Abschnitten des ersten Teils der Bewegungsbahn des Manipulators eingefügt ist. Weiterhin können mehrere zweite Manipulatorprogramme aufeinanderfolgend in das erste Manipulatorprogramm eingebunden werden, wobei zwischen den einzelnen zweiten Manipulatorprogrammen Abschnitte des ersten Teils der Bewegungsbahn des Manipulators ausgeführt werden, und/oder die zweiten Manipulatorprogramme direkt aufeinander folgend ausgeführt werden.

Das vorangehend beschriebene Verfahren ermöglicht es, Vorteile des ersten Manipulatorprogramms, welches in einer ersten Programmiersprache implementiert ist, mit Vorteilen anderweitig implementierten zweiten Manipulatorprogrammen zu verbinden. Beispielsweise kann das erste Manipulatorprogramm sehr einfach und ressourcensparend implementiert sein, wohingegen das zweite Manipulatorprogramm Funktionen wie das Vor- und Rückfahren auf der Bahn und/oder das Anwählen bestimmter Bahnpunkte/Bahnabschnitte ermöglicht, um beispielsweise ein iteratives Optimieren der Bewegungsbahn zu ermöglichen.

In einem Beispiel kann das Verfahren zum Steuern eines Manipulatorsystems bei der industriellen Fertigung eingesetzt werden. Während das erste Manipulatorprogramm die Bewegungsbahn des Manipulators beschreibt, welche dazu dient den Manipulator von einer Fertigungsposition zu einer nächsten Fertigungsposition zu bewegen, können die Fertigungsschritte selbst, wie etwa das Fügen eines Werkstücks, in zweiten Manipulatorprogrammen implementiert, vorzugsweise "geteacht" sein.

Insbesondere kann das zweite Manipulatorprogramm in einer zweiten Programmiersprache implementiert sein, wobei die erste und zweite Programmiersprache je zumindest einen Manipulatorbefehl enthalten, dessen Funktion in der jeweils anderen Programmiersprache nicht enthalten ist. Somit können unterschiedliche Programmiersprachen miteinander vorteilhaft kombiniert werden und Funktionalitäten unterschiedlicher Programmiersprachen miteinander verknüpft werden. Als Programmiersprache ist hier neben den herkömmlichen Roboterprogrammiersprachen auch das Programmieren mittels Handführen oder manuellem Führen der Manipulatoren zu verstehen, dass zum "Online"-Erstellen von Bewegungsbahnen genutzt wird.

Insbesondere kann der zweite Teil der Bewegungsbahn zumindest zwei Bahnabschnitte umfassen, denen jeweils zumindest ein Bahnattribut zugeordnet ist. Dies ermöglicht den zweiten Teil der Bewegungsbahn des Manipulators mittels des ersten Manipulatorprogramms individuell anzupassen. Beispielsweise kann das Bahnattribut die Geschwindigkeit des Manipulators auf dem entsprechenden Bahnabschnitt beschreiben, welches von dem ersten Manipulatorprogramm anpassbar ist. Somit ist es möglich beispielsweise auf einem ersten Bahnabschnitt des zweiten Teils der Bewegungsbahn zunächst eine gewisse Position rasch anzufahren, d.h. mit einer ersten Geschwindigkeit, und sich auf einem zweiten Bahnabschnitt der eigentlich beabsichtigten Position langsam zu nähern, d.h. mit einer zweiten Geschwindigkeit. Weitere Bahnattribute können beispielsweise das Umschalten des Regelungsmodus des Manipulators betreffen, wonach in einem ersten Bahnabschnitt beispielsweise positionsgeregelt verfahren wird und in einem zweiten Bahnabschnitt kraftgeregelt, Impedanz geregelt oder nachgiebig geregelt und/oder dergleichen verfahren wird. Andere Bahnattribute sind ebenso möglich. Insbesondere können jedem Bahnabschnitt auch mehrere Bahnattribute zugeordnet sein, sodass der entsprechende Abschnitt der Bewegungsbahn individuell unter verschiedenen Aspekten mittels des ersten Manipulatorprogramms angepasst werden kann.

Insbesondere kann zumindest ein Bahnattribut des zweiten Manipulatorprogramms die Lage eines Schaltpunkts auf der Bewegungsbahn definieren. Dieser Bahnschaltpunkt kann als Raumkoordinate oder vorzugsweise als Bahnfortschrittsvariable des zweiten Teils der Bewegungsbahn des Manipulators definiert sein. Bahnfortschrittsvariablen können beispielsweise eine ein-dimensionale Größe sein, welche die Länge der abgefahrenen Bewegungsbahn angibt. Andere Definitionen, wie etwa Zeit basierte Definitionen und/oder dergleichen von Bahnfortschrittsvariablen sind ebenso möglich. Ein Schaltpunkt definiert dabei einen Punkt, in dem beispielsweise ein Endeffektor an- bzw. ausgeschalten wird, oder in dem ein Greifer auf- oder zugefahren wird. Alternativ kann in einem Schaltpunkt beispielsweise die Manipulatorgeschwindigkeit geändert oder ein Regelungsmodus des Manipulators umgeschalten werden. Andere Schaltvorgänge sind ebenso möglich.

Insbesondere kann zumindest ein Bahnattribut des zweiten Manipulatorprogramms einen Orientierungsverlauf und/oder eine Soll-Geschwindigkeit des Manipulators definieren. Somit kann der Manipulator auf dem entsprechenden Bahnabschnitt mit einer vorherbestimmten Orientierung und/oder Geschwindigkeit verfahren werden. Die Soll-Geschwindigkeit ist dabei nicht auf eine konstante Geschwindigkeit beschränkt, sondern kann vielmehr ein Geschwindigkeitsprofil umfassen. Insbesondere kann das Geschwindigkeitsprofil zeitabhängig sein oder von einer Bahnfortschrittsvariablen abhängen.

Insbesondere kann ein weiteres Bahnattribut des zweiten Manipulatorprogramms die Lage des Koordinatensystems im Raum beschreiben, in welchem Koordinatensystem der zweite Teil der Bewegungsbahn beschrieben ist, welcher mittels des zweiten Manipulatorprogramms beschrieben ist. Die Lage im Raum wird dabei durch die Position des Ursprungs des Koordinatensystems und die Orientierung der Achsen des Koordinatensystems bestimmt. Durch die Anpassung der Lage des Koordinatensystems im Raum, insbesondere durch das zumindest eine Bahnattribut, kann der zweite Teil der Bewegungsbahn räumlich verschoben und/oder rotiert werden. Somit ist es beispielsweise möglich, den durch Punkte definierten zweiten Teil der Bewegungsbahn derart im Raum zu verschieben/zu rotieren, dass der Startpunkt des zweiten Teils der Bewegungsbahn mit einem entsprechenden Endpunkt eines Abschnitts des ersten Teils der Bewegungsbahn des Manipulators korreliert. Somit kann ein direkter Übergang zwischen erstem Teil und zweitem Teil der Bewegungsbahn des Manipulators sichergestellt werden. Überdies können so definierte zweite Teile der Bewegungsbahn des Manipulators an unterschiedlichen räumlichen Positionen durchgeführt werden. Wird beispielsweise das Greifen mittels eines Manipulators durch ein entsprechendes zweites Manipulatorprogramm bestimmt, kann das Greifen mittels diesem zweiten Manipulatorprogramm an mehreren räumlichen Positionen durchgeführt werden. Beispielsweise kann das Greifen auf unterschiedlichen Positionen einer vorherbestimmten Positionsmatrix erfolgen, die nacheinander entsprechend dem ersten Manipulatorprogramm durch den Manipulator angefahren werden. Durch das Einbinden des zweiten Manipulatorprogramms, kann in den unterschiedlichen Positionen der Positionsmatrix eine entsprechende Greifbewegung des Manipulators durchgeführt werden. Beispielsweise kann dies beim Bestücken/Entladen von Paletten genutzt werden.

Das erste Manipulatorprogramm ist dazu eingerichtet, den zweiten Teil der Bewegungsbahn, der mittels des zweiten Manipulatorprogramms beschrieben ist und/oder einen Übergang von dem ersten Teil der Bewegungsbahn zu dem zweiten Teil der Bewegungsbahn, zu optimieren, insbesondere zu glätten, wobei mittels des ersten Manipulatorprogramms zumindest ein Bahnattribut eines zweiten Manipulatorprogramms verändert werden kann, um den zweiten Teil der Bewegungsbahn und/oder einen Übergang von dem ersten Teil der Bewegungsbahn zu dem zweiten Teil der Bewegungsbahn zu optimieren, insbesondere zu glätten. Dies ermöglicht eine weitere Optimierung der gesamten Bewegungsbahn des Manipulators. Insbesondere können hierdurch Funktionen wie das Überschleifen von Bahnpunkten und dergleichen bereitgestellt werden.

Weiterhin kann das zweite Manipulatorprogramm separate Bahnpunkte des zweiten Teils der Bewegungsbahn umfassen, wobei die separaten Bahnpunkte vorzugsweise Teach-In-Bahnpunkte sind. Eine entsprechende Definition des zweiten Manipulatorprogramms mittels Bahnpunkten des zweiten Teils der Bewegungsbahn ist insbesondere vorteilhaft, da eine derartige Definition das Vorwärts- und Rückwärtsabfahren der Bewegungsbahn, insbesondere des zweiten Teils der Bewegungsbahn vereinfacht. Auch das gezielte Anfahren von bestimmten Bahnabschnitten, um von dort die Bewegungsbahn des Manipulators abzufahren, kann einfach mittels der punktweisen Definition der Bewegungsbahn erreicht werden. Somit kann die Abschnittsweise "Online"-Erstellung von Manipulatorprogrammen einfach und intuitiv durch das Einbinden von zweiten Manipulatorprogrammen in "offline" erstellte erste Manipulatorprogramme ermöglicht werden, um die Vorteile beider Erstellungsverfahren zu nutzen.

Weiterhin kann zumindest einem separaten Bahnpunkt des zweiten Manipulatorprogramms ein Bahnkrümmungsparameter zugeordnet sein. Dieser Bahnkrümmungsparameter gibt an, unter welcher Krümmung die Bewegungsbahn des Manipulators durch den entsprechenden Bahnpunkt hindurchgehen soll. Somit kann auf Basis der Krümmungsparameter das Aussehen des zweiten Teils der Bewegungsbahn des Manipulators angepasst und optimiert werden. Ebenso kann zumindest einem separaten Bahnpunkt des zweiten Manipulatorprogramms ein Orientierungsparameter zugeordnet sein, welcher angibt, mit welcher Orientierung der Manipulator und/oder der Endeffektor des Manipulators diesen entsprechenden Bahnpunkt durchfahren sollen.

Durch das punktweise Bestimmen der Bewegungsbahn und die Bereitstellung von Funktionen wie Vorwärts- und Rückwärtsfahrt und das separate Anfahren von bestimmten Bahnabschnitten, ist ein iteratives Optimieren der Bewegungsbahn möglich, welches vorzugsweise "online" ausgeführt wird. Das heißt der Manipulator durchfährt beim Erstellen des zweiten Teils der Bewegungsbahn des Manipulators den entsprechenden Teil der Bewegungsbahn mehrmals und der entsprechende Teil kann während des Durchfahrens oder unmittelbar nach dem Durchfahren entsprechend angepasst und optimiert werden.

Weiterhin kann das Verfahren zum Steuern eines Manipulatorsystems zumindest den folgenden Verfahrensschritt umfassen:
- Erstellen und/oder Ändern des zweiten Manipulatorprogramms, wobei das Erstellen und/oder Ändern in einem separaten Editor erfolgt, und der Editor vorzugsweise Funktionen zum schrittweisen Abfahren des zweiten Teils der Bewegungsbahn, zum Vor- und Rückfahren des Manipulators auf dem zweiten Teil der Bewegungsbahn und/oder zum Anfahren separat definierter Bahnpunkte des zweiten Teils der Bewegungsbahn bereitstellt.

Ein derartiges Erstellen und/oder Ändern des zweiten Manipulatorprogramms ermöglicht das iterative Erstellen und/oder Optimieren des zweiten Teils der Bewegungsbahn. Hierdurch können insbesondere Bewegungsbahnen die mit herkömmlichen Roboterprogrammiersprachen nur schwierig implementiert werden können, wie beispielsweise das Abfahren einer räumlich vorgegebenen Kontur, einfacher implementiert werden. Das Abfahren räumlich vorgegebener Konturen kann beispielsweise beim Abfahren einer Schweißbahn und/oder ähnlichen Anwendungen durch manuelles Führen bzw. "Online"-Erstellen der Bewegungsbahn implementiert werden.

Insbesondere kann der Editor eine Anzeigeeinrichtung umfassen, die die aktuelle Position des Manipulators auf dem zweiten Teil der Bewegungsbahn anzeigt, wenn das zweiten Manipulatorprogramm durchlaufen wird. Eine derartige optische Anzeige vereinfacht die iterative Erstellung und Optimierung des entsprechenden Teils der Bewegungsbahn des Manipulators. Insbesondere kann hierdurch das Erstellen und Ändern des zweiten Manipulatorprogramms mittels eines virtuellen Manipulators erfolgen. Dazu wird vorzugsweise der virtuelle Manipulator auf der Anzeigeneinrichtung angezeigt, und die entsprechend erstellte und/oder optimierte Bewegungsbahn eingeblendet. Entspricht die Bewegungsbahn der beabsichtigten Bewegungsbahn, kann das Erstellen und/oder Ändern des zweiten Manipulatorprogramms abgeschlossen werden und das zweite Manipulatorprogramm kann entsprechend dem vorangehend beschriebenen Verfahren bereitgestellt und eingebunden werden.

Insbesondere kann das Verfahren weiterhin die folgenden Verfahrensschritte umfassen:
- Bereitstellen einer Vielzahl von zweiten Manipulatorprogrammen, wobei jedes zweite Manipulatorprogramm einen Teil der Bewegungsbahn des Manipulators beschreibt und Auswählen eines zweiten Manipulatorprogramms aus der Vielzahl von zweiten Manipulatorprogrammen, um das ausgewählte zweite Manipulatorprogramm in das erste Manipulatorprogramm einzubinden, wobei die Auswahl des zweiten Manipulatorprogramms von ersten Manipulatorprogrammparametern abhängig ist.

Werden eine Vielzahl von zweiten Manipulatorprogrammen bereitgestellt, so kann eine Vielzahl von unterschiedlichen Teilbewegungsbahnen des Manipulators vordefiniert sein, um diese bei Bedarf in das erste Manipulatorprogramm einzubinden.

Beispielsweise können mittels des/der zweiten Manipulatorprogramms/Manipulatorprogramme Schweißnähte, insbesondere Schweißnähte beim Schutzgasschweißen bestimmt werden. Sind bei einem Bauteil mehrere Schweißnähte zu schweißen, können diese durch eine Vielzahl von zweiten Manipulatorprogrammen bestimmt werden. Insbesondere bei Schweißnähten, bei denen eine hohe Präzision gefordert ist, können mittels der zweiten Manipulationsprogramme geteacht werden und damit der Verlauf der entsprechenden Schweißnaht sehr genau angepasst und effizient optimiert werden. Das erste Manipulationsprogramm kann in diesem beispielhaften Fall Zustellbewegungen sowie komplexe Logiken, wie das reguläre mehrmalige Abfahren einer Schweißnaht für Mehrlagenschweißen, oder das ausnahmsweise Wiederabfahren einer Naht bei aufgetretenem Schweißfehler definierten. Dabei können die Schweißparameter angepasst werden.

In einem weiteren veranschaulichenden Beispiel kann ein zweites Manipulatorprogramm das Greifen mittels des Manipulators definieren. Ein weiteres zweites Manipulatorprogramm kann das Montieren einer gegriffenen Komponente definieren und ein noch weiteres zweites Manipulatorprogramm kann das Öffnen des Greifers definieren. Das erste Manipulatorprogramm könnte in diesem Fall das Anfahren der Greifposition und der Montageposition definieren. Kann das erste Manipulatorprogramm mittels ersten Manipulatorprogrammparametern das einzubindende zweite Manipulatorprogramm auswählen, so können mittels der zweiten Manipulatorprogramme eine Vielzahl von zusätzlichen Funktionen dem ersten Manipulatorprogramm bereitgestellt werden. Insbesondere kann durch das Anwählen unterschiedlicher zweiter Manipulatorprogramme eine Vielzahl von zweiten Manipulatorprogrammen beispielsweise vordefiniert sein.

Insbesondere kann die Vielzahl von zweiten Manipulatorprogrammen in einer Datenbank bereitgestellt sein, wodurch die Verwaltung, das Anwählen und/oder das Einbinden der zweiten Manipulatorprogramme vereinfacht werden. Weiterhin kann eine entsprechende Datenbank leicht mit weiteren zweiten Manipulatorprogrammen ergänzt werden.

Weiterhin wird die vorangehend beschriebene Aufgabe gelöst durch ein computerlesbares Medium, welches Programmbefehle umfasst, welche dazu geeignet sind eine Steuereinrichtung eines Manipulatorsystems dazu zu veranlassen, ein Verfahren gemäß der vorangehenden Beschreibung auszuführen. Somit kann das Verfahren auf unterschiedlichen Steuereinrichtungen bereitgestellt werden, wenn das entsprechende computerlesbare Medium der Steuereinrichtung zur Verfügung gestellt wird und die entsprechenden Programmbefehle mittels der Steuereinrichtung ausgeführt werden. Weiterhin kann die Aufgabe durch eine Steuereinrichtung gelöst werden, welche zumindest einen Prozessor und ein computerlesbares Medium umfasst und dazu eingerichtet ist ein Manipulatorsystem dazu zu veranlassen, das vorangehend beschriebene Verfahren auszuführen. Ebenso kann die Aufgabe durch ein Computerprogramm gelöst werden, welches Programmbefehle umfasst, welche dazu geeignet sind, eine Steuereinrichtung eines Manipulatorsystems dazu zu veranlassen, das vorangehend beschriebene Verfahren auszuführen.

### Ausführliche Beschreibung der Figuren

Im Folgenden wird die Erfindung unter Bezugnahme auf die beigefügten Figuren näher erläutert. Dabei zeigt:
- Fig. 1: eine schematische Darstellung eines Manipulatorsystems;
- Fig. 2A: eine schematische Darstellung eines ersten Manipulatorprogramms und eines zweiten Manipulatorprogramms;
- Fig. 2B: eine weitere schematische Darstellung des ersten Manipulatorprogramms und des zweiten Manipulatorprogramms von Fig. 2A;
- Fig. 3: eine schematische Darstellung eines ersten Manipulatorprogramms und einer Vielzahl von zweiten Manipulatorprogrammen, und
- Fig. 4: eine schematische Darstellung eines ersten Manipulatorprogramms und einer Vielzahl von zweiten Manipulatorprogrammen, welche in einer Datenbank bereitgestellt sind.

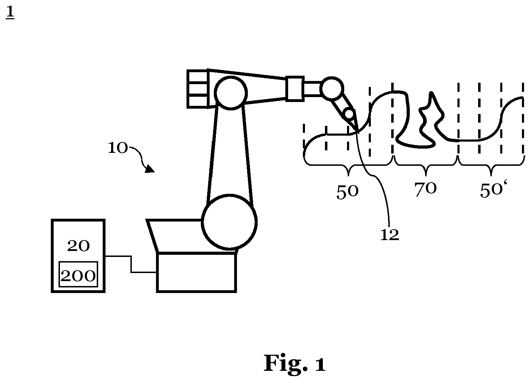

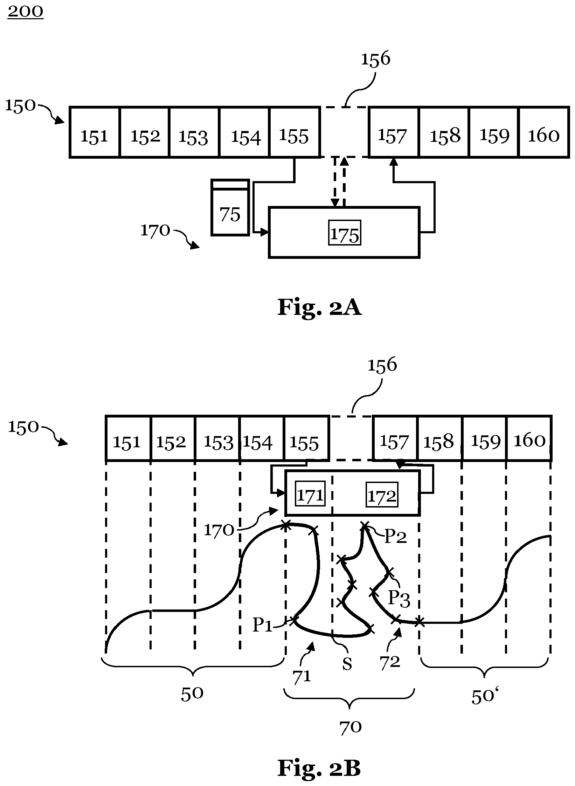

Insbesondere zeigt Fig. 1 ein Manipulatorsystem 1, welches zumindest einen Manipulator 10 und eine Steuereinrichtung 20 umfasst. Die Steuereinrichtung 20 ist dazu eingerichtet den Manipulator 10 mittels eines Gesamt-Manipulatorprogramms 200 zu steuern. Das Gesamt-Manipulatorprogramm 200 beschreibt beispielsweise die Bewegungsbahn des Manipulators, welche sich aus einem ersten Teil einer Bewegungsbahn 50, 50' und einem zweiten Teil einer Bewegungsbahn 70 zusammensetzt. Die Bewegungsbahn 50, 50', 70 wird mittels des Endeffektors 12 des Manipulators 10 abgefahren. Dabei wird die Bewegungsbahn mittels unterschiedlicher Bahnabschnitte definiert. Die Erstellung der Bewegungsbahn 50, 70, 50' wird insbesondere unter Bezug auf Fig. 2B näher erläutert.

Fig. 2A zeigt ein Gesamt-Manipulatorprogramm 200, welches ein erstes Manipulatorprogramm 150 sowie ein zweites Manipulatorprogramm 170 umfasst. Das erste Manipulatorprogramm 150 besteht aus mehreren Programmbefehlen 151 bis 160. In das erste Manipulatorprogramm 150 kann zwischen den Programmbefehlen 155 und 157 ein zweites Manipulatorprogramm 170 eingebunden werden. Das zweite Manipulatorprogramm 170 umfasst ein Bahnattribut 175, welches beispielsweise durch die Manipulatorprogrammparameter 75 vom ersten Manipulatorprogramm 150 verändert werden kann. Beispielsweise kann das Bahnattribut 175 die Geschwindigkeit einer entsprechenden Bewegungsbahn bestimmen. Weiterhin kann, wie durch die Pfeile mit durchgezogener Linie dargestellt ist, ein Manipulatorprogrammparameter 75 direkt beim Aufruf des zweiten Manipulatorprogramms 170 übergeben werden, um ein Bahnattribut 175 zu ändern.

In einem ersten Beispiel wird das erste Manipulatorprogramm 150 nach dem Ausführen des Programmbefehls 155 unterbrochen und es wird mit dem zweiten Manipulatorprogramm 170 fortgesetzt. Nach erfolgreichem Beenden des zweiten Manipulatorprogramms 170, wird das erste Manipulatorprogramm 150 mit Programmbefehl 157 fortgeführt. In einem zweiten Beispiel wird das erste Manipulatorprogramm 150 nicht unterbrochen, sondern läuft wie durch die gestrichelten Pfeile und Blöcke 156 dargestellt im Hintergrund weiter. Beispielsweise kann während das zweite Manipulatorprogramm 170 läuft das erste Manipulatorprogramm 150 ebenfalls weiterlaufen, um Programmbefehl 156 ausführen. Der Programmbefehl 156 kann beispielsweise das Bahnattribut 175 verändern, wie durch die gestrichelten Pfeile angedeutet. Analog sind weitere Veränderungen von weiteren Bahnattributen möglich.

Fig. 2B zeigt schematisch eine implementierte Bewegungsbahn eines Manipulators, welche durch das erste Manipulatorprogramm 150 und das zweite Manipulatorprogramm 170 definiert ist. Zur Verdeutlichung definieren die Programmbefehle 151-160 des ersten Manipulatorprogramms 150 einen ersten Teil der Bewegungsbahn 50, 50'. Tatsächlich können die Programmbefehle 151 bis 160 jedoch auch weitere Funktionalitäten umfassen und die Ablauflogik des Gesamt-Manipulatorprogramms 200 beschreiben. In das erste Manipulatorprogramm 150 ist das zweite Manipulatorprogramm 170 derart eingebunden, dass der erste Teil der Bewegungsbahn in zwei Bahnabschnitte 50, 50' geteilt ist. Zwischen die zwei Bahnabschnitte 50, 50' ist der zweite Teil der Bewegungsbahn 70 eingebunden.

Beispielsweise definiert der erste Programmbefehl 151 eine Kreisfahrt des Manipulators 10, der zweite Programmbefehl 152 eine Geradeausfahrt, der dritte Programmbefehl 153 wiederum eine Kreisfahrt usw. Der zweite Teil der Bewegungsbahn 70 ist nicht durch derartige konventionelle "offline" erstellte Bewegungsbefehle des Manipulators definiert, sondern kann beispielsweise durch eine Vielzahl von Bahnpunkten P1, P2, P3, usw. definiert werden. Explizit bezeichnet sind hier die Punkte P1, P2 und P3. Jedoch können eine Vielzahl von weiteren Punkten definiert werden, wie durch die kleinen Kreuze angedeutet, um eine entsprechende Bewegungsbahn des Manipulators zu definieren.

Insbesondere können diese Punkte durch Teachen des Manipulators, d.h. "online", erstellt worden sein. Jedem der Punkte P1, P2, P3 kann zudem ein Krümmungsparameter und/oder ein Orientierungsparameter zugeordnet sein, welcher die Krümmung der Bewegungsbahn 70 in dem entsprechenden Bahnpunkt bzw. eine Orientierung des Manipulators in dem entsprechenden Bahnpunkt definiert. Die Krümmungsparameter und/oder Orientierungsparameter können zur Optimierung der Bewegungsbahn genutzt werden. Weiterhin können diese Krümmungsparameter und/oder ein Orientierungsparameter beispielsweise Bahnattribute sein, die durch das erste Manipulatorprogramm verändert werden können.

Insbesondere kann auf dem zweiten Teil der Bewegungsbahn 70 ein Schaltpunkt S definiert sein, dessen Lage beispielsweise als Bahnattribut bestimmt ist. Dieser Schaltpunkt S kann beispielsweise ein Punkt der Bewegungsbahn sein, in dem die Bahngeschwindigkeit eines ersten Abschnitts 71 des zweiten Teils der Bewegungsbahn 70 des Manipulators 10 verändert wird, so dass der zweite Abschnitt 72 des zweiten Teils der Bewegungsbahn 70 des Manipulators 10 mit einer anderen Geschwindigkeit abgefahren wird. Die entsprechenden Bahngeschwindigkeiten können durch Bahnattribute 171, 172 des zweiten Manipulatorprogramms 170 definiert sein. Diese Bahnattribute 171, 172 können beispielsweise durch das erste Manipulatorprogramm 150 verändert werden.

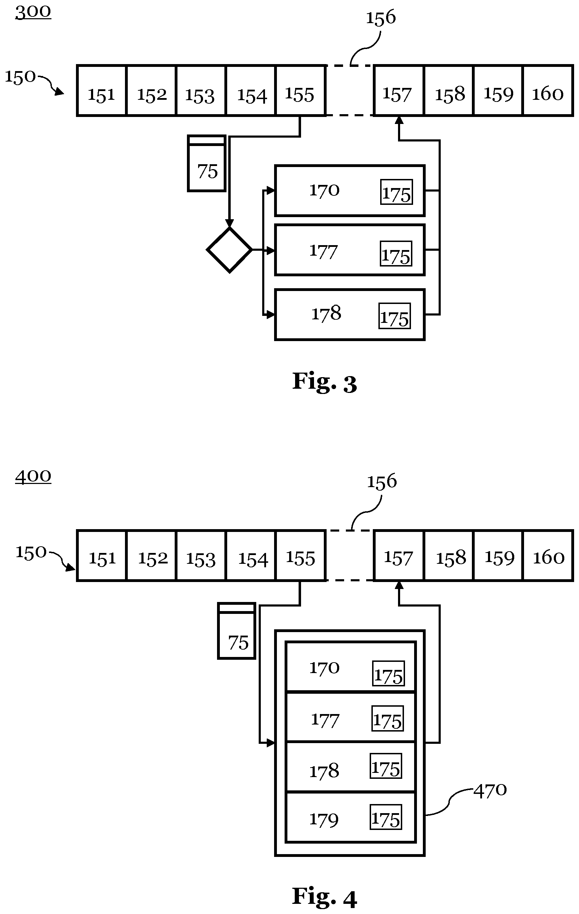

In Fig. 3 ist ein weiteres Gesamt-Manipulatorprogramm 300 dargestellt, welches ein erstes Manipulatorprogramm 150 sowie die zweiten Manipulatorprogramme 170, 177 und 178 umfasst. Das erste Manipulatorprogramm 150 ist aus einer Vielzahl von Programmbefehlen 151 bis 160 zusammengesetzt, welche die Ablauflogik des Manipulatorprogramms definieren. In das erste Manipulatorprogramm 150 können die zweiten Manipulatorprogramme 170, 177, 178 derart eingebunden werden, dass in einer ersten Alternative das erste Manipulatorprogramm 150 nach dem Programmbefehl 155 unterbrochen wird und nach erfolgreichem Ausführen eines zweiten Manipulatorprogramms 170, 177, 178 das erste Manipulatorprogramm 150 mit Programmbefehl 157 fortgesetzt wird. Alternativ kann zumindest ein Programmbefehl 156 des ersten Manipulatorprogramms 150 im Hintergrund ablaufen, so dass das erstes Manipulatorprogramm 150 fortgesetzt wird, während das zweite Manipulatorprogramm 170, 177, 178 ausgeführt wird.

Ausgehend von Programmbefehl 155, wird eines der zweiten Manipulatorprogramme 170, 177, 178 mittels eines Manipulatorprogrammparameters 75 ausgewählt, welches anschließend eingebunden und/oder ausgeführt wird. Die zweiten Manipulatorprogramme 170, 177, 178 können je zumindest ein Bahnattribut 175 umfassen, das vom ersten Manipulatorprogramm 150 verändert werden kann.

In Fig. 4 ist ein weiteres Gesamt-Manipulatorprogramm 400 dargestellt, welches ähnlich zu dem Gesamt-Manipulatorprogramm 300 ist, welches in Fig. 3 dargestellt ist. Das Gesamt-Manipulatorprogramm 400 unterscheidet sich vom Gesamt-Manipulatorprogramm 300 dadurch, dass die zweiten Manipulatorprogramme 170, 177, 178, 179 in einer Datenbank 470 bereitgestellt werden.

### Bezugszeichenliste

- 1: Manipulatorsystem
- 10: Manipulator
- 12: Endeffektor
- 20: Steuerungseinrichtung
- 50, 50': erster Teil einer Bewegungsbahn
- 70: zweiter Teil einer Bewegungsbahn
- 71, 72: Abschnitte einer Bewegungsbahn
- 75: Parameter
- 150: erstes Manipulatorprogramm
- 151-161: Programmbefehle
- 170, 177, 178, 179: zweites Manipulatorprogramm
- 175: Bahnattribut
- 200, 300, 400: Gesamt-Manipulatorprogramm
- P1, P2, P3: Bahnpunkt
- S: Schaltpunkt
- 470: Datenbank

## Patentansprüche

1. Verfahren zum Steuern eines Manipulatorsystems (1), wobei das Manipulatorsystem (1) zumindest einen Manipulator (10) und eine Steuereinrichtung (20) umfasst, welche Steuereinrichtung (20) dazu eingerichtet ist, den Manipulator (10) mittels eines Manipulatorprogramms (200) zu steuern, wobei das Verfahren die folgenden Verfahrensschritte umfasst:
Bereitstellen eines ersten Manipulatorprogramms (150), das in einer ersten Programmiersprache implementiert ist;
Bereitstellen zumindest eines zweiten Manipulatorprogramms (170), wobei das zweite Manipulatorprogramm (170) einen zweiten Teil einer Bewegungsbahn (70) des Manipulators (10) beschreibt, und nicht in der ersten Programmiersprache implementiert ist, und wobei das zweite Manipulatorprogramm (170) zumindest ein Bahnattribut (175) umfasst, welches mittels des ersten Manipulatorprogramms (150) geändert werden kann;
Einbinden des zweiten Manipulatorprogramms (170) in das erste Manipulatorprogramm (150), um ein Gesamt-Manipulatorprogramm (200) zu definieren, und
Steuern des Manipulatorsystems (1) mittels der Steuereinrichtung (20) und des Gesamt-Manipulatorprogramms (200)
wobei das zweite Manipulatorprogramm (170) in einer zweiten Programmiersprache implementiert ist,
**dadurch gekennzeichnet, dass** das erste Manipulatorprogramm einen ersten Teil einer Bewegungsbahn (50) des Manipulators (10) beschreibt und dass die erste und zweite Programmiersprache je zumindest einen Manipulatorprogramm-Befehl enthalten, dessen Funktion in der jeweils anderen Programmiersprache nicht enthalten ist und wobei das erste Manipulatorprogramm (150) dazu eingerichtet ist, den zweiten Teil der Bewegungsbahn (70), der mittels des zweiten Manipulatorprogramms (170) beschrieben ist und/oder einen Übergang von dem ersten Teil der Bewegungsbahn (50) zu dem zweiten Teil der Bewegungsbahn (70), zu optimieren, insbesondere zu glätten, wobei mittels des ersten Manipulatorprogramms (150) vorzugsweise zumindest ein Bahnattribut (171, 172) des zweiten Manipulatorprogramms (170) verändert werden kann, um den zweiten Teil der Bewegungsbahn (70) und/oder einen Übergang von dem ersten Teil der Bewegungsbahn (50) zu dem zweiten Teil der Bewegungsbahn (70) zu optimieren, insbesondere zu glätten.

2. Verfahren zum Steuern eines Manipulatorsystems (1) nach Anspruch 1, wobei der zweite Teil der Bewegungsbahn (70) vorzugsweise zumindest zwei Bahnabschnitte (71, 72) umfasst, denen jeweils zumindest ein Bahnattribut (171, 172) zugeordnet ist.

3. Verfahren zum Steuern eines Manipulatorsystems (1) nach einem der vorangegangen Ansprüche, wobei zumindest ein Bahnattribut (175) des zweiten Manipulatorprogramms (170) die Lage eines Schaltpunkts (S) auf der Bewegungsbahn (70) definiert.

4. Verfahren zum Steuern eines Manipulatorsystems (1) nach einem der vorangegangen Ansprüche, wobei zumindest ein Bahnattribut (175) des zweiten Manipulatorprogramms (170) eine Soll-Geschwindigkeit des Manipulators (10) definiert.

5. Verfahren zum Steuern eines Manipulatorsystems (1) nach einem der vorangegangen Ansprüche, wobei zumindest ein Bahnattribut (175) des zweiten Manipulatorprogramms (170) die Lage des Koordinatensystems im Raum beschreibt, in welchem Koordinatensystem der zweite Teil der Bewegungsbahn (70) beschrieben ist, welcher mittels des zweiten Manipulatorprogramms (170) beschrieben ist.

6. Verfahren zum Steuern eines Manipulatorsystems (1) nach einem der vorangegangen Ansprüche, wobei das zweite Manipulatorprogramm (170) separate Bahnpunkte (P1, P2, P3) des zweiten Teils der Bewegungsbahn (70) umfasst, wobei die separaten Bahnpunkte (P1, P2, P3) vorzugsweise Teach-in Bahnpunkte sind.

7. Verfahren zum Steuern eines Manipulatorsystems (1) nach Anspruch 6, wobei zumindest einem separaten Bahnpunkt (P1, P2, P3) des zweiten Manipulatorprogramms (170) weiterhin ein Bahnkrümmungsparameter und/oder ein Orientierungsparameter des Manipulators und/oder eines Endeffektors des Manipulators zugeordnet ist.

8. Verfahren zum Steuern eines Manipulatorsystems (1) nach einem der vorangegangen Ansprüche, wobei das Verfahren weiterhin zumindest den folgenden Verfahrensschritt umfasst:
Erstellen und/oder Ändern des zweiten Manipulatorprogramms (170), wobei das Erstellen und/oder Ändern in einem separaten Editor erfolgt, und der Editor vorzugsweise Funktionen zum schrittweisen Abfahren des zweiten Teils der Bewegungsbahn, zum Vor- und Rückfahren des Manipulators auf dem zweiten Teil der Bewegungsbahn und/oder zum Anfahren separat definierter Bahnpunkte des zweiten Teils der Bewegungsbahn (70) bereitstellt.

9. Verfahren zum Steuern eines Manipulatorsystems (1) nach Anspruch 8, wobei der Editor eine Anzeigeneinrichtung umfasst, die die aktuelle Position des Manipulators (10) auf dem zweiten Teil der der Bewegungsbahn (70) anzeigt, wenn das zweite Manipulatorprogramm (170) durchlaufen wird.

10. Verfahren zum Steuern eines Manipulatorsystems (1) nach einem der vorangegangen Ansprüche, wobei das Verfahren weiterhin die folgenden Verfahrensschritte umfasst:
Bereitstellen einer Vielzahl von zweiten Manipulatorprogrammen (170, 177, 178, 179), wobei jedes der zweiten Manipulatorprogramme einen Teil der Bewegungsbahn (70) des Manipulators (10) beschreibt, und
Auswählen eines der zweiten Manipulatorprogramme (170, 177, 178, 179) aus der Vielzahl von zweiten Manipulatorprogrammen, um das ausgewählte zweite Manipulatorprogramm in das erste Manipulatorprogramm (150) einzubinden, wobei die Auswahl des zweiten Manipulatorprogramms (170, 177, 178, 179) von ersten Manipulatorprogramm-Parametern abhängig ist.

11. Computerlesbares Medium, welches Programmbefehle umfasst, welche dazu geeignet sind, eine Steuereinrichtung (20) eines Manipulatorsystems (1) dazu zu veranlassen, ein Verfahren gemäß einem der Ansprüche 1 bis 10 auszuführen.

12. Steuereinrichtung (20), welche zumindest einen Prozessor und ein computerlesbares Medium umfasst und dazu eingerichtet ist ein Manipulatorsystem (1) dazu zu veranlassen, ein Verfahren gemäß einem der Ansprüche 1 bis 10 auszuführen.

13. Computerprogramm, welches Programmbefehle umfasst, welche dazu geeignet sind, eine Steuereinrichtung (20) eines Manipulatorsystems (1) dazu zu veranlassen, ein Verfahren gemäß einem der Ansprüche 1 bis 10 auszuführen.

## Claims

1. Method for controlling a manipulator system (1), wherein the manipulator system (1) comprises at least one manipulator (10) and a control device (20), which control device (20) is configured to control the manipulator (10) by means of a manipulator program (200), wherein the method comprises the following method steps:
providing a first manipulator program (150) which is implemented in a first programming language;
providing at least a second manipulator program (170), wherein the second manipulator program (170) describes a second part of a movement path (70) of the manipulator (10) and is not implemented in the first programming language, and wherein the second manipulator program (170) comprises at least one path attribute (175) which can be changed by means of the first manipulator program (150) ;
integrating the second manipulator program (170) into the first manipulator program (150) in order to define an overall manipulator program (200), and
controlling the manipulator system (1) by means of the control device (20) and the overall manipulator program (200),
wherein the second manipulator program (170) is implemented in a second programming language,
**characterized in that** the first manipulator program describes a first part of the movement path (50) of the manipulator (10) and **in that** the first and second programming language each contain at least one manipulator program command the function of which is not contained in the respective other programming language and wherein the first manipulator program (150) is configured to optimize, in particular to smooth, the second part of the movement path (70), which is described by means of the second manipulator program (170), and/or a transition from the first part of the movement path (50) to the second part of the movement path (70), wherein at least one path attribute (171, 172) of the second manipulator program (170) can be changed by means of the first manipulator program (150) in order to optimize, in particular to smooth, the second part of the movement path (70) and/or a transition from the first part of the movement path (50) to the second part of the movement path (70).

2. Method for controlling a manipulator system (1) according to claim 1, wherein the second part of the movement path (70) preferably comprises at least two path sections (71, 72) to each of which at least one path attribute (171, 172) is assigned.

3. Method for controlling a manipulator system (1) according to either of the preceding claims, wherein at least one path attribute (175) of the second manipulator program (170) defines the position of a switching point (S) on the movement path (70).

4. Method for controlling a manipulator system (1) according to one of the preceding claims, wherein at least one path attribute (175) of the second manipulator program (170) defines a setpoint speed of the manipulator (10) .

5. Method for controlling a manipulator system (1) according to one of the preceding claims, wherein at least one path attribute (175) of the second manipulator program (170) describes the position of the coordinate system in space, in which coordinate system the second part of the movement path (70) is described, which second part of the movement path is described by means of the second manipulator program (170).

6. Method for controlling a manipulator system (1) according to one of the preceding claims, wherein the second manipulator program (170) comprises separate path points (P1, P2, P3) of the second part of the movement path (70), wherein the separate path points (P1, P2, P3) are preferably teach-in path points.

7. Method for controlling a manipulator system (1) according to Claim 6, wherein a path curvature parameter and/or an orientation parameter of the manipulator and/or of an end effector of the manipulator is furthermore assigned to at least one separate path point (P1, P2, P3) of the second manipulator program (170).

8. Method for controlling a manipulator system (1) according to one of the preceding claims, wherein the method furthermore comprises at least the following method step:
creating and/or changing the second manipulator program (170), wherein the creating and/or changing takes place in a separate editor, and the editor preferably provides functions for the step-by-step execution of the second part of the movement path, for the forward and backward travel of the manipulator on the second part of the movement path and/or for the stopping at separately defined path points of the second part of the movement path (70).

9. Method for controlling a manipulator system (1) according to Claim 8, wherein the editor comprises a display device which displays the current position of the manipulator (10) on the second part of the movement path (70) if the second manipulator program (170) is being run through.

10. Method for controlling a manipulator system (1) according to one of the preceding claims, wherein the method furthermore comprises the following method steps:
providing a multiplicity of second manipulator programs (170, 177, 178, 179), wherein each of the second manipulator programs describes a part of the movement path (70) of the manipulator (10), and
selecting one of the second manipulator programs (170, 177, 178, 179) from the multiplicity of second manipulator programs in order to integrate the selected second manipulator program into the first manipulator program (150), wherein the selection of the second manipulator program (170, 177, 178, 179) is dependent on first manipulator program parameters.

11. Computer-readable medium which comprises program commands which are suitable for causing a control device (20) of a manipulator system (1) to perform a method according to one of Claims 1 to 10.

12. Control device (20) which comprises at least one processor and a computer-readable medium and is configured to cause a manipulator system (1) to perform a method according to one of Claims 1 to 10.

13. Computer program which comprises program commands which are suitable for causing a control device (20) of a manipulator system (1) to perform a method according to one of Claims 1 to 10.

## Revendications

1. Procédé de commande d'un système de manipulateurs (1), le système de manipulateurs (1) comprenant au moins un manipulateur (10) et un dispositif de commande (20), lequel dispositif de commande (20) est conçu pour commander le manipulateur (10) au moyen d'un programme de manipulateur (200), le procédé comprenant les étapes de procédé suivantes :
fournir un premier programme de manipulateur (150) qui est implémenté dans un premier langage de programmation ;
fournir au moins un deuxième programme de manipulateur (170), le deuxième programme de manipulateur (170) décrivant une deuxième partie d'une trajectoire (70) du manipulateur (10) et n'étant pas implémenté dans le premier langage de programmation, et le deuxième programme de manipulateur (170) comprenant au moins un attribut de trajectoire (175) qui peut être modifié au moyen du premier programme de manipulateur (150) ;
intégrer le deuxième programme de manipulateur (170) dans le premier programme de manipulateur (150) pour définir un programme de manipulateur global (200), et
commander le système de manipulateurs (1) au moyen du dispositif de commande (20) et du programme de manipulateur global (200), le deuxième programme de manipulateur (170) étant implémenté dans un deuxième langage de programmation,
**caractérisé en ce que**
le premier programme de manipulateur décrit une première partie de la trajectoire (50) du manipulateur (10), et
les premier et deuxième langages de programmation contiennent chacun au moins une instruction de programme de manipulateur dont la fonction n'est pas contenue dans l'autre langage de programmation respectif et
le premier programme de manipulateur (150) étant conçu pour optimiser, notamment lisser, la deuxième partie de la trajectoire (70) qui est décrite au moyen du deuxième programme de manipulateur (170) et/ou une transition allant de la première partie de la trajectoire (50) à la deuxième partie de la trajectoire (70), au moins un attribut de trajectoire (171, 172) du deuxième programme de manipulateur (170) pouvant être modifié au moyen du premier programme de manipulateur (150) afin d'optimiser, notamment lisser, la deuxième partie de la trajectoire (70) et/ou une transition allant de la première partie de la trajectoire (50) à la deuxième partie de la trajectoire (70).

2. Procédé de commande d'un système de manipulateurs (1) selon la revendication 1, la deuxième partie de la trajectoire (70) comprenant de préférence au moins deux portions de trajectoire (71, 72) à chacune desquelles est associé au moins un attribut de trajectoire (171, 172).

3. Procédé de commande d'un système de manipulateurs (1) selon l'une des revendications précédentes, au moins un attribut de trajectoire (175) du deuxième programme de manipulateur (170) définissant la position d'un point de commutation (S) sur la trajectoire (70).

4. Procédé de commande d'un système de manipulateurs (1) selon l'une des revendications précédentes, au moins un attribut de trajectoire (175) du deuxième programme de manipulateur (170) définissant une vitesse cible du manipulateur (10).

5. Procédé de commande d'un système de manipulateurs (1) selon l'une des revendications précédentes, au moins un attribut de trajectoire (175) du deuxième programme de manipulateur (170) décrivant la position du système de coordonnées dans l'espace, système de coordonnées dans lequel est décrite la deuxième partie de la trajectoire (70) qui est décrite par le deuxième programme de manipulateur (170).

6. Procédé de commande d'un système de manipulateurs (1) selon l'une des revendications précédentes, le deuxième programme de manipulateur (170) comprenant des points de trajectoire séparés (P₁, P₂, P₃) de la deuxième partie de la trajectoire (70), les points de trajectoire séparés (P₁, P₂, P₃) étant de préférence des points de trajectoire d'apprentissage.

7. Procédé de commande d'un système de manipulateurs (1) selon la revendication 6, au moins un point de trajectoire séparé (P₁, P₂, P₃) du deuxième programme de manipulateur (170) étant associé également à un paramètre de courbure de trajectoire et/ou un paramètre d'orientation du manipulateur et/ou un effecteur terminal du manipulateur.

8. Procédé de commande d'un système de manipulateurs (1) selon l'une des revendications précédentes, le procédé comprenant en outre au moins l'étape de procédé suivante :
créer et/ou modifier le deuxième programme de manipulateur (170), la création et/ou la modification étant effectuées dans un éditeur séparé, et l'éditeur fournissant de préférence des fonctions de parcours pas à pas de la deuxième partie de la trajectoire, de déplacement en avant et en arrière du manipulateur sur la deuxième partie de la trajectoire et/ou d'approche de points de trajectoire définis séparément de la deuxième partie de la trajectoire (70).

9. Procédé de commande d'un système de manipulateurs (1) selon la revendication 8, l'éditeur comprenant un dispositif d'affichage qui affiche la position actuelle du manipulateur (10) sur la deuxième partie de la trajectoire (70) lorsque le deuxième programme de manipulateur (170) est exécuté.

10. Procédé de commande d'un système de manipulateurs (1) selon l'une des revendications précédentes, le procédé comprenant en outre les étapes de procédé suivantes :
fournir un grand nombre de deuxièmes programmes de manipulateur (170, 177, 178, 179), chacun des deuxièmes programmes de manipulateur décrivant une partie de la trajectoire (70) du manipulateur (10), et
sélectionner l'un des deuxièmes programmes de manipulateur (170, 177, 178, 179) parmi le grand nombre de deuxièmes programmes de manipulateur afin d'intégrer le deuxième programme de manipulateur sélectionné dans le premier programme de manipulateur (150), la sélection du deuxième programme de manipulateur (170, 177, 178, 179) dépendant de premiers paramètres de programme de manipulateur.

11. Support lisible par ordinateur qui comprend des instructions de programme qui sont adaptées pour ordonner à un dispositif de commande (20) d'un système de manipulateurs (1) de mettre en œuvre un procédé selon l'une des revendications 1 à 10.

12. Dispositif de commande (20) qui comprend au moins un processeur et un support lisible par ordinateur et qui est conçu pour ordonner à un système de manipulateurs (1) de mettre en œuvre un procédé selon l'une des revendications 1 à 10.

13. Logiciel qui comprend des instructions de programme qui sont adaptées pour ordonner à un dispositif de commande (20) d'un système de manipulateurs (1) de mettre en œuvre un procédé selon l'une des revendications 1 à 10.
